# EUROPEAN PATENT APPLICATION

(11) **EP 1 602 891 A1**
(43) Date of publication of application: **07.12.2005**
(21) Application number: 05011663.1
(22) Date of filing: 31.05.2005
(51) Int. Cl.: G01B 5/255, G01B 7/315, G01B 11/275, G01B 21/26

(54) **Support for measuring instruments**

(30) Priority: 04.06.2004 IT mo20040142
(71) Applicant: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)
(74) Representative: Crugnola, Pietro

(57) **Abstract**

The support (1) for measuring instruments of bodies to be measured comprises a frame (100) equipped with coupling members with said instruments, adjustable members (234) of frame (100) supporting and constraining bodies to be measured, said support and constraint members (234) being provided with adapting means (26) to said bodies to be measured angularly rotatable by angles of more than 90°.

## Description

The present invention relates to a support for measuring instruments.

In the sector of devices intended for tyre repairers, particular support members are comprised that are suitable for being fitted onto the wheel rims of vehicles, normally onto the edges of the latter, in order to be able to insert onto shanks with which the supports are equipped high-precision measuring instruments, for example to check and possibly adjust the position of the wheels.

These support members comprise a frame that is equipped with a pair of slides that slide on appropriate guides in directions that are convergent or divergent in relation to the centre of the support member, driven by a worm screw that engages both.

Each slide is provided with a pair of fashioned feet that protrude in a direction that is orthogonal to the direction of sliding of the slides and which are intended to rest on fixed points of the wheel rims.

When the sliding of the slides occurs in a divergent direction, the feet rest on the edges of the rims and the progressive increase of the force of reaction tightens the support members on them.

On the opposite side to the feet, a shank extends from the support member in a central position which, when the support elements are mounted and fixed on the rims, coincides with the wheel axle: on this shank the measuring instruments are precisely fittable, which are provided with an appropriate calibrated coupling hole.

More in detail, the frame consists of a pair of parallel cylindrical bars that form the aforementioned guides and are locked by a central transverse body that is equipped with respective passages in which the bars are inserted and fixed on which the slides run.

At one end of the worm screw a hand grip is fixed that the operator rotates to adjust the reciprocal distance between the slides.

Each slide is provided with a pair of arms which protrude radially and which all lie on a common plane; each arm carries one of the feet for support of the rims.

The feet all lie on an ideal circumference that has a diameter that is adjustable by adjusting the worm screw until it substantially coincides with the diameter of the wheel rim on which the feet have to be rested and constrained.

Known support members are able to be mounted on wheel rims that have diameters comprised between a minimum value and a maximum value in relation to the stroke that the slides can perform on the cylindrical bars.

Support members are thus available that can be mounted on wheel rims having small to medium diameters and support member are available that can be mounted on wheel rims having medium to large diameters.

In order to carry out the checks of the alignment of all the wheels of the vehicles, it is thus necessary to have at least two support members available in such a way as to be able to comprise all or at least most of the diameters of the wheel rims normally used by vehicles.

In order to achieve such a result, from patent application RE 2001U16 in the name of Corghi S.p.A. a solution is known that consists of providing each arm with an extension element that is articulated at the end of the arm facing radially outwards.

The extension element is lockable in three positions that are rotated and selectable according to preset angles: in a first position the extension element is aligned on the radial direction, in a second position it is rotated 45° in an anticlockwise position in relation to the radial direction and in a third position it is rotated by 45° in a clockwise direction: the angle of rotation of each extension thus has a maximum amplitude of 90° and the radial direction is the bisecting one thereof.

This solution enables each arm to be extended outwards and thus enables the adaptability of the wheel rim support member having large diameters to be increased even if the support member is of the type suitable for being mounted on wheel rims having medium to small diameters.

Nevertheless, this technical solution is complicated to implement and inconvenient to use because of the manoeuvres that the operators have to perform to position the different extensions of all the arms.

Furthermore, owing to the orientation directions of the extensions, facing only externally, the aforementioned technical solution is usable only on support elements to permit adaptations to wheel rims having from medium to large diameters and not to wheel rims having medium to small diameters.

According to a further known embodiment of a support for measuring instruments, it is provided for that, in order to extend its arms, extension elements are used that are coupled with them, joining them two by two, and that for each use they have to be fitted with screws at the ends of the arms and be dismantled after use to restore normal use of the support member.

This further solution is inconvenient to use and, also in this case, the extension of the arms can occur only with diameters having medium to large diameter values.

This prior art is improvable in terms of the practicality of the use of supports for measuring instruments and their structural simplicity.

An object of the invention is to make a support for measuring instruments that with a sole model enables to achieve an adaptation to numerous types of wheel rims onto which it has to be mounted.

Another object of the invention is to make a support for measuring instruments that has a structure that is noticeably simplified in relation to known supports.

Another object of the invention is to make a support for measuring instruments that is convenient to use and can be very precisely positioned.

According to the invention a support is devised for measuring instruments of bodies to be measured comprising: a frame equipped with coupling members with said instruments, adjustable support and constraint members of said frame on said bodies to be measured, characterised in that said support and constraint members are provided with adapting means to said bodies to be measured that is angularly rotatable by angles that are greater than 90°.

Further features and advantages of the invention will become clearer from the disclosure of a preferred, but not exclusive, embodiment of a support for measuring instruments, illustrated by way of example in the attached table of drawings, in which:
Figure 1 is a schematic frontal view of a support for measuring instruments;
Figure 2 is a perspective view of the support in figure 1 in an attachment configuration to rims of a wheel that have reduced diameters;
Figure 3 is a detailed view on an enlarged scale of adapting means during a position adjusting phase;
Figure 4 shows, on an enlarged scale, a fragmentary side view of adapting means.

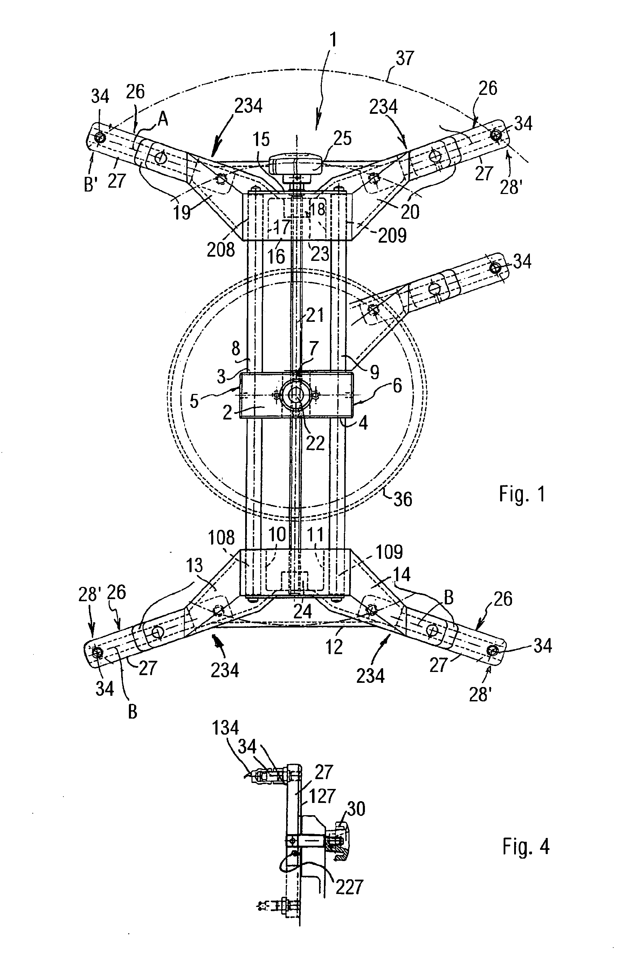

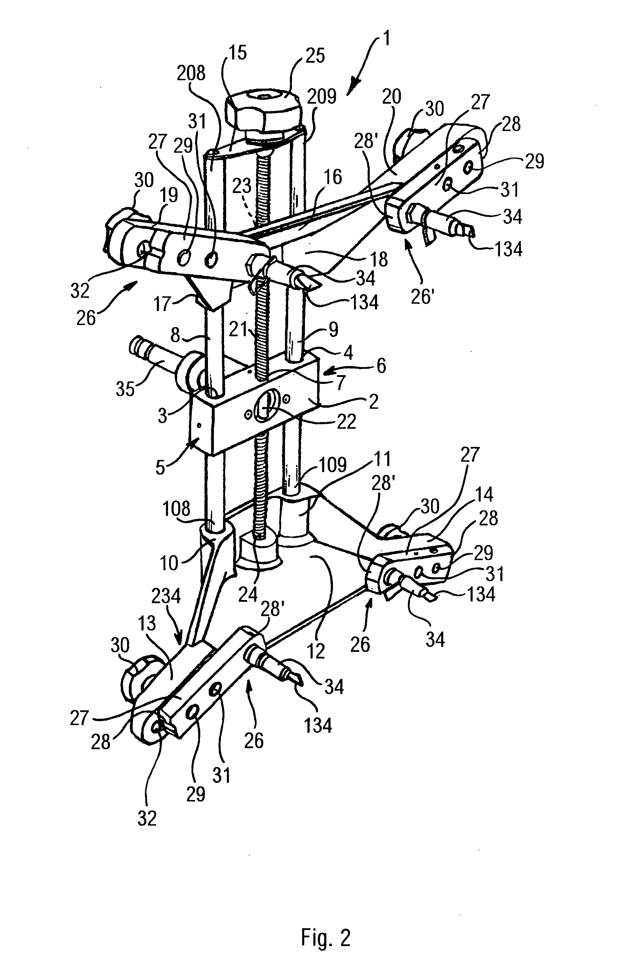

With reference to figures 1 and 2, 1 indicates overall a support for measuring instruments, not illustrated because their structure is irrelevant to the invention.

The support 1 comprises a frame 100 that in turn comprises a central body 2, preferably prismatic, which is transversely traversed by two through holes 3 and 4 obtained parallel to two side faces 5 and 6 of the central body 2, in proximity thereof.

Between the through holes 3 and 4, in a symmetric position to them, a further through hole 7 is obtained, the function of which will be better explained below.

In the through holes 3 and 4, two cylindrical bars 8 and 9 are coupled and locked, that are parallel to each other and are through bars having equal lengths.

First ends 108 and 109 of the cylindrical bars 8 and 9 are fitted in a slidable manner into respective sleeves 10 and 11 obtained in a first fusion element 12 that joins them and shapes a pair of arms 13 and 14 that extend from it in substantially radial directions.

Second ends 208 and 209 opposite the first ends 108 and 109 are joined together by means of a transverse plate 15.

A second fusion element 16 is mounted slidingly on the cylindrical bars 8 and 9, on opposite sides in relation to the central body 2; the second fusion element 16 forms, like the first element 12, a pair of sleeves 17 and 18 in which the cylindrical bars 8 and 9 and a pair of arms 19 and 20 are fitted which, like the arms 13 and 14, extend outwards, in a substantially radial direction.

Inside the further hole 7 a worm screw 21 freely passes with opposing threads originating in a central portion 22 thereof; the worm screw 21 engages respective threaded holes 23 and 24 obtained aligned on one another respectively in the first element 12 and in the second fusion element 16 and has an end that extends beyond the hole 23 and is inserted in a through hole obtained in the transverse plate 15 aligned on the holes 23 and 24 until it protrudes from the latter to tighten a manoeuvring hand grip 25.

Each of the arms 13, 14, 19, 20 is provided with an adapting means 26, particularly for adapting and fitting the support 1 to rims of a wheel that are not illustrated.

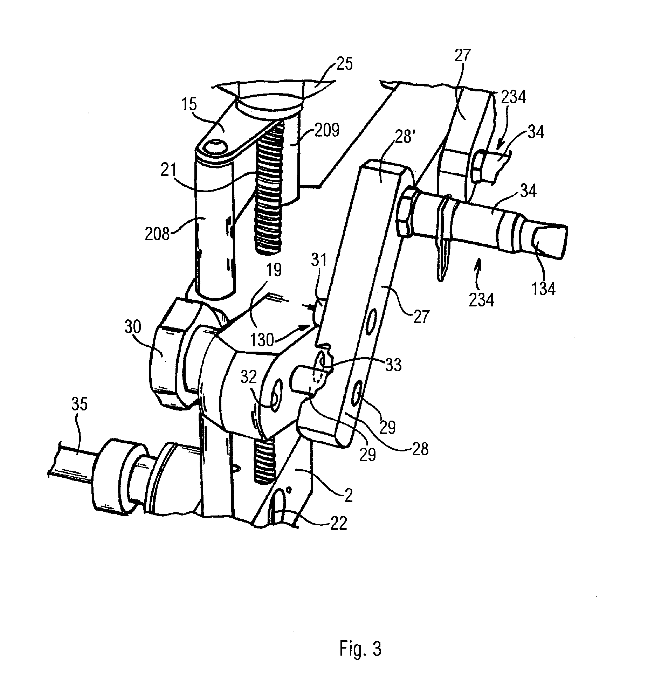

As more clearly seen in figure 3, each means 26 comprises a block 27 with an elongated shape that has an end 28 hinged on the respective arm, in the specific case on the arm 19, by means of a hinge pivot 29 that traverses in an orthogonal direction both the block and the corresponding end of the arm 19, protruding on the opposite side of the latter: the protruding portion is threaded and on it a threaded knob 30 is screwable that, when it is screwed, clamps the block 27 against the respective arm 19, while, when it is unscrewed, it makes it loose in relation to the latter and free to be rotated.

Each block 27 thus carries a second transverse pivot 31 that protrudes on the respective arm; in the latter two holes 32 and 33 with a blind bottom that are suitable for alternatively receiving the second pivot 31 when the block 27 is rotated outwards or inwards and is clamped against the arm 19, are obtained in a symmetrical position in relation to the hinging pivot 29 and are aligned on the radial direction.

Each block 27 has at its end 28' opposite to end 28 a foot 34 that is orthogonal thereto that is suitable for resting on the edge of a rim of a wheel and for this reason faces the opposite side to the hinging pivot 29.

From the prismatic central body 2 a shank 35 extends orthogonally to it on which measuring instruments of the alignment of a wheel are fittable.

As is visible in figure 1, all the feet 34 have a terminal nail 134 that is shaped to be coupled with the edge of a wheel rim; the feet 34 are arranged on an ideal circumference line that has a diameter that is adjustable between a minimum of 10" and a maximum of 26" and is indicated in figure 1 with dotted lines 36 and 37.

In a possible further embodiment of the support 1 for measuring instruments illustrated in figure 4, it is provided for that the blocks 27' have faces facing the respective arms 13, 14, 19, 20 equipped with a longitudinal rib 127; correspondingly, the faces of the aforementioned arms 13, 14, 19, 20 have grooves 227 orientated in the crossed directions and suitable for being coupled with the ribs 127, to lock the rotation or the blocks 27' when the threaded knobs 30 are tightened.

The operation of the support 1 for measuring instruments is subsequently described by way of example for use in the automotive field, more in detail to test the alignment of the wheels of a vehicle.

The user sets up the blocks 27 rotated centripetally or centrifugally in the crossed directions A and B that coincide with the axes of the arms 13, 14, 19, 20, unscrewing the threaded knobs 30 and removing the pivots 31 from the respective holes 32 or 33: as illustrated in figure 3, this enables the blocks 27 to be arranged in a convergent or divergent configuration and the feet 34 to be moved closer together or further apart.

When the latter are again locked in rotation against their respective arm, after retightening of the threaded knobs 30 and the restoration of the engagement between the pivots 31 and the holes 32 or 34, or alternatively between the ribs 127 and the grooves 227, the user operates the operating handle 25, rotating the worm screw 21 to the right or the left to modify the distance between the feet 34.

In the exemplifying configuration illustrated in figure 2, the blocks 27 are rotated to the centre, namely towards the axis of the shank 35 to adapt to wheel rims with diameters that are substantially medium to small; rotation in a first direction of the worm screw 21, equipped with opposing threads, first determines the symmetrical movement towards each other of the first element 12 and of the second element 16 in relation to the central body 2, until the nails 134 of the feet 34 can insert themselves and rest inside the edge of a wheel rim of a wheel to which the support 1 has to be applied.

Subsequently, the user reverses the direction of rotation of the hand grip 25 and the nails 134 are progressively coupled with said edge, adhering to it through a thrust in a radial direction and stably locking the support 1 to the wheel to be monitored with the shank 35 in a position that is coaxial with the central axis of the wheel, ready to receive a measuring instrument.

In the configuration illustrated in figure 2, the feet 34 can be adapted to small diameters down to 10 inches, as indicated by the dotted circumference 36.

If for a subsequent check the user has to fit the support 1 to a wheel that has a wheel rim with a 26-inch diameter, he again unscrews the threaded knobs 30 until the blocks 27 can be removed from the respective arms 13, 14, 19, 20 until the pivots 31 can be extracted from the holes 33; this frees the blocks 27 that are rotated outwards and then have their rotation locked again by tightening the threaded knobs 30 and inserting the pivots 31 into the holes 32 (or the ribs 127 into the grooves 227).

The user again adjusts the handgrip 25 to take the nails 134 to grip the edge of a wheel rim, as previously disclosed.

## Claims

1. Support (1) for measuring instruments of bodies to be measured comprising:
- a frame (100) equipped with coupling members with said instruments,
- adjustable support and constraint means (234) of said frame (100) on said bodies to be measured,
**characterised in that** said support and constraint members (234) are provided with adapting means (26) to said bodies to be measured that is angularly rotatable by angles greater than 90°.

2. Support (1) according to claim 1 wherein said frame (100) comprises:
- a central element (2),
- guide means (8, 9) supported symmetrically on opposite parts of said central element (2),
- a pair of slide means (12, 16) mounted slideably convergent on, or divergent from, said central element (2) on said guide means (8, 9),
- drive means (21) of said slide means (12, 16).

3. Support (1) according to claim 1 wherein said adapting means (26) lies on a common plane parallel to said guide means (8, 9).

4. Support (1) according to claim 1 or 2 wherein said adapting means (26) is fitted with lock means (130) at least in positions aligned in intersecting directions (A, B).

5. Support (1) according to claim 1 or 3 or 4 wherein said intersecting directions (A, B) are radial directions.

6. Support according to claim 1 wherein said support and constraint members (234) comprise respective arm means (13, 14, 19, 20) protruding outwardly from said slide means (12, 16)

7. Support (1) according to any one of claims 1 to 6 wherein said adapting means (26) comprises:
- corresponding block members (27) parallelly adjacent to said arm means (13, 14, 19, 20) and having first ends (28) hinged rotating on corresponding first ends of the latter with pivot means (29) perpendicular to both, feet means (34) orthogonally connected extending from said block members (27) from a second end (28') of the latter opposite said first end (28) and from the opposite side in relation to said arm means (13, 14, 19, 20).

8. Support (1) according to any one of claims 4 to 7 wherein said locking means (130) comprises for each member a block (27):
- at least a second pivot member (31) fitted transversely in a respective block member (27) between said first end (28) and second end (28') and protruding towards said a respective arm means (13, 14, 19, 20),
- hole means (32, 33) obtained in said arm means (13, 14, 19, 20) bilaterally to said pivot means (29) and aligned in said intersecting directions (A, B) to receive alternatively said second pivot member (31) when said lock means (27) is rotated,
- return screw means or removal screw means of said lock means (27) towards, or from, said arm means (13, 14, 19, 20).

9. Support (1) according to any one of claims 4 to 7 wherein said locking means (130) comprises for each block member (27):
- at least a longitudinal rib (127) protruding from said lock means (27) and facing a respective arm means (13, 14, 19, 20),
- at least a corresponding groove (227) obtained longitudinally in each arm means (13, 14, 19, 20) in said intersecting directions (A, B) and facing said at least a longitudinal rib (127) to couple with the latter.
